## Europäisches Patentamt

## European Patent Office

## Office européen des brevets

(19)

(11) Numéro de publication: **0 101 358**
**B1**

(12) # FASCICULE DE BREVET EUROPEEN

(45) Date de publication du fascicule du brevet:
**09.12.87**

(51) Int. Cl.⁴: **F 16 H 47/04**

(21) Numéro de dépôt: **83401544.8**

(22) Date de dépôt: **27.07.83**

(54) Transmission à dérivation de puissance hydraulique.

(30) Priorité: **30.07.82 FR 8213377**

(43) Date de publication de la demande:
**22.02.84 Bulletin 84/8**

(45) Mention de la délivrance du brevet:
**09.12.87 Bulletin 87/50**

(84) Etats contractants désignés:
**BE DE GB IT NL**

(56) Documents cités:
**GB - A - 2 014 671**
**GB - A - 2 016 098**

(73) Titulaire: **REGIE NATIONALE DES USINES RENAULT,
Boîte postale 103 8-10 avenue Emile Zola,
F-92109 Boulogne-Billancourt (FR)**

(72) Inventeur: **Poilve, Hervé, 204 rue de Croix Nivert,
F-75015 Paris (FR)**

(74) Mandataire: **Chassagnon, Jean-Alain et al, REGIE
NATIONALE DES USINES RENAULT (S.0804),
F-92109 Boulogne-Billancourt Cedex (FR)**

ACTORUM AG

**Description**

La présente invention a pour objet une transmission pour véhicule et notamment pour véhicule utilitaire tel qu'un tracteur agricole, dans laquelle une partie de la puissance est transmise par une dérivation comprenant des moyens hydrauliques.

Dans les engins utilitaires d'une manière générale et dans les véhicules tels que les tracteurs agricoles ou forestiers, on utilise en général pour la transmission du couple moteur, une boîte de vitesses associée à un dispositif appelé «boîte de gamme» qui a pour fonction principale l'inversion du sens de rotation de l'arbre de sortie permettant la marche arrière ainsi que la sélection entre une gamme de vitesse lente et une gamme de vitesse plus rapide (gamme «champ» et gamme «route» dans le cas d'un tracteur agricole). Les boîtes de vitesses utilisées sont habituellement des boîtes de vitesses mécaniques de type classique possédant de quatre à huit rapports de vitesses synchronisées ou non. On utilise également des boîtes de vitesses mécaniques de ce type équipées d'un dispositif doubleur ou tripleur de gamme utilisant notamment des freins et embrayages multidisques coopérant avec des trains d'engrenages épicycloïdaux. On obtient ainsi le passage automatique et sous couple entre deux rapports de vitesses proches généralement dans un rapport de 1,2.

On constate dans la pratique que ces boîtes de vitesses, y compris celles qui sont équipées d'un dispositif doubleur ou tripleur de gamme, présentent un certain nombre d'inconvénients. En effet, il est nécessaire, pour la qualité et la régularité du travail ainsi que pour le confort de l'utilisateur, de pouvoir choisir de façon suffisamment souple et précise le rapport de transmission afin d'obtenir suivant les travaux, une vitesse d'avancement constante adaptée au sol et à l'outil tracté ou encore une vitesse d'avancement variable avec la densité de la récolte. Il est également nécessaire de pouvoir obtenir un régime moteur constant lorsque l'on travaille avec un outil relié à la prise de force du moteur ou au contraire un régime moteur variable permettant de répondre à des à-coups de puissance importants. Enfin, il peut être nécessaire d'économiser l'énergie et d'augmenter le rendement global d'une exploitation agricole par une augmentation de la qualité du travail liée à une diminution de sa durée et de la consommation d'énergie.

Or, les engins de ce type tels que les tracteurs agricoles possèdent peu d'énergie cinétique de sorte qu'à chaque débrayage en vue d'un changement de vitesses, quelle qu'en soit la raison, le tracteur s'arrête presque aussitôt. Dans les boîtes de vitesses de type classique utilisées jusqu'à présent, la multiplication du nombre des rapports de vitesses mécaniques discrets ne supprime pas cette difficulté et complique en outre le choix de l'utilisateur. Un dispositif doubleur de gamme nécessite au moins une aide à la conduite afin d'avertir l'utilisateur du choix le plus judicieux.

Ces boîtes de vitesses ne donnent donc pas pleinement satisfaction à leurs utilisateurs.

Pour résoudre ce problème, on a déjà utilisé pour les tracteurs agricoles, des transmissions à variateurs hydrostatiques permettant d'obtenir une variation continue du rapport de vitesse. De tels dispositifs associés à une régulation convenable, s'ils permettent bien d'obtenir un large choix de vitesses tout en simplifiant l'utilisation du véhicule, ne présentent pas à l'heure actuelle un rendement suffisant pour les rendre compétitifs. On connaît également des transmissions à dérivation de puissance hydraulique comme celles objet du document GB-A-2 014 671, comprenant deux trains d'engrenages épicycloïdaux avec un variateur hydrostatique comportant deux éléments hydrostatiques à cylindrée variable montés dans un circuit fermé. Le document GB-A-2 014 671 révèle les caractéristiques du préambule de la revendication 1.

La présente invention a pour objet une transmission adaptée à la puissance d'engins de ce type et en particulier à des tracteurs agricoles ou forestiers, utilisant une régulation économique de la puissance du moteur et permettant l'obtention d'un rendement comparable à celui d'une boîte mécanique de type classique tout en améliorant de manière sensible l'agrément de la conduite.

La présente invention a également pour objet une transmission relativement simple dans son principe et très compacte dans sa disposition de façon à pouvoir être associée aisément à une boîte de gamme à l'intérieur d'un carter de transmission de tracteur agricole.

La transmission à dérivation de puissance hydraulique selon le préambule de la revendication 1 comprend deux trains d'engrenages épicycloïdaux comportant deux arbres de sortie parallèles. Un variateur hydrostatique comportant deux éléments hydrostatiques à cylindrée variable pouvant jouer alternativement le rôle de pompe ou de moteur et montés dans un circuit hydraulique fermé, est disposé dans la transmission de façon que chacun des éléments hydrostatiques soit lié mécaniquement au pignon planétaire de l'un des trains d'engrenages épicycloïdaux. La transmission comporte en outre deux ensembles de pignons présentant deux rapports d'engrènement différents pouvant coopérer alternativement, sous l'action de moyens de commande de synchronisation afin de définir deux rapports de vitesse de rotation pour les arbres de sortie respectifs des deux trains d'engrenages épicycloïdaux qui permettent d'obtenir deux plages de variation continue de rapports de vitesse.

L'invention est caractérisée comme décrit dans la partie caractérisante de la revendication 1.

Les éléments hydrostatiques sont de préférence accouplés directement en bout des trains d'engrenages épicycloïdaux à leur pignon planétaire respectif. Les deux arbres de sortie respectifs des trains d'engrenages épicycloïdaux sont avantageusement montés sensiblement en triangle avec l'arbre d'entrée du mouvement de la transmission, lesdits arbres étant parallèles entre eux.

La transmission à dérivation de puissance utilise donc un variateur hydrostatique mis en parallèle avec un mécanisme principal de type classique au moyen de trains d'engrenages épicycloïdaux, tout en conservant la boîte de gamme habituelle. On obtient ainsi une possibilité de variation continue et automatique du rapport de vitesse en commandant de manière simultanée les cylindrées des deux éléments hydrostatiques dont l'un joue le rôle d'une pompe, tandis que l'autre joue le rôle d'un moteur.

Une telle transmission, associée par exemple à un microprocesseur comportant en mémoire des données de consommation spécifique du moteur, permet à l'utilisateur de commander de façon économique les choix des rapports de vitesse de façon à obtenir une vitesse d'avancement ou un régime moteur particulier et adapter ces choix au travail effectué par le tracteur agricole.

Une telle transmission a en outre l'avantage de ne faire passer qu'une fraction, qui peut être par exemple de l'ordre de 20%, de la puissance totale dans la partie hydrostatique.

Selon un premier mode de réalisation de l'invention, la transmission comprend un arbre d'entrée muni d'un pignon d'entrée engrenant avec une couronne dentée liée à un élément de l'un des trains d'engrenages épicycloïdaux. Cet élément, qui peut être la couronne ou le porte-satellite du train d'engrenages, engrène à son tour avec l'élément correspondant de l'autre train d'engrenages épicycloïdal. La transmission utilise donc trois axes principaux qui sont parallèles entre eux, de préférence disposés dans le sens longitudinal du tracteur et peuvent être avantageusement montés en triangle. L'élément de sortie de chacun des trains d'engrenages épicycloïdaux est solidaire d'un arbre sur lequel sont montés respectivement les pignons des deux ensembles de pignons à rapports d'engrènement différents. Un dispositif d'embrayage commandé est en outre prévu sur l'un des arbres afin de sélectionner l'un ou l'autre des deux ensembles de pignons.

La commande d'une transmission selon l'invention comprendra en général des vérins hydrauliques pour le réglage des cylindrées des deux éléments hydrostatiques et un dispositif d'embrayage à commande hydraulique, de préférence multidisque, pour le choix d'un rapport d'engrènement des arbres de sortie des trains d'engrenages épicycloïdaux. La combinaison de ces deux commandes permettra dans chaque cas le choix d'un rapport de vitesses déterminé.

Selon l'invention, la transmission comprend des moyens de commande de synchronisation automatiques. Ces moyens montés dans le circuit hydraulique du variateur hydrostatique comprennent des moyens pour interrompre le circuit hydraulique fermé des éléments hydrostatiques et une pompe hydraulique auxiliaire montée dans un circuit hydraulique auxiliaire de façon à pouvoir alimenter l'un des éléments hydrostatiques. Un dispositif de verrouillage commandé est en outre monté sur au moins l'un des arbres de sortie d'un train d'engrenages épicycloïdal afin de sélectionner l'un ou l'autre des deux ensembles de pignons à rapports d'engrènement différents. Un distributeur à quatre voies est en outre de préférence monté dans le circuit auxiliaire afin de permettre l'inversion du sens d'alimentation de l'élément hydrostatique considéré. On utilise ainsi l'élément hydrostatique à cylindrée variable qui se trouve disponible au moment du passage d'une plage de variation de vitesse à une autre, en l'alimentant par une pompe auxiliaire et en réglant sa cylindrée à une valeur prédéterminée de façon à obtenir une synchronisation des organes rotatifs avant leur verrouillage par le dispositif de verrouillage. Ce dispositif peut être un système à crabot éventuellement muni d'éléments de synchronisation.

Dans une variante préférée, la pompe auxiliaire est entraînée par le moteur du véhicule, la cylindrée dudit élément hydrostatique étant réglée, lors de la synchronisation, à une valeur prédéterminée indépendante du régime du moteur.

L'invention sera mieux comprise à l'étude d'un mode de réalisation décrit à titre d'exemples non limitatifs illustrés par les dessins annexés sur lesquels:

La fig. 1 montre schématiquement une transmission selon l'invention avec les moyens de sélection et de changement automatiques du rapport d'engrènement entre les deux arbres de sortie de la transmission.

La fig. 2 montre les variations de la vitesse relative par rapport à la vitesse du moteur en fonction des rapports de vitesse pour chacun des deux éléments hydrostatiques.

Les figs. 3, 4, 5 et 6 montrent le circuit des puissances mises en jeu par la transmission selon l'invention en divers points particuliers du fonctionnement de celle-ci.

La fig. 7 montre les variations de la puissance dérivée dans le variateur hydrostatique en fonction des rapports de vitesse.

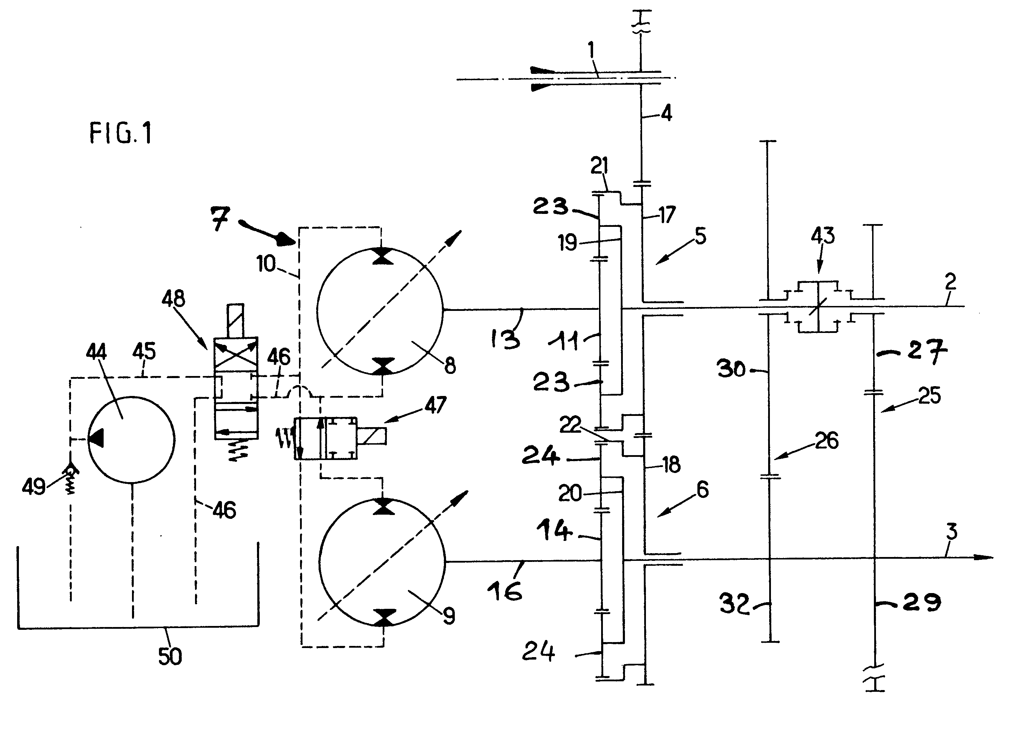

Telle qu'elle est représentée sur la fig. 1 très schématiquement, la transmission selon l'invention comprend trois arbres parallèles 1, 2 et 3. Les trois arbres parallèles 1, 2 et 3 sont disposés dans le sens longitudinal du tracteur agricole équipé de la transmission et peuvent être avantageusement montés en triangle. L'arbre 1 correspond à l'arbre d'embrayage du groupe motopropulseur et à l'entrée du mouvement. Il porte un pignon 4 qui en est solidaire. Le deuxième arbre 2 porte un train d'engrenages épicycloïdal 5. Il en est de même de l'arbre 3 ou arbre de sortie qui porte le train d'engrenages épicycloïdal 6. Un variateur hydrostatique référencé 7 dans son ensemble est disposé en parallèle du mécanisme principal. Le variateur hydrostatique 7 comprend deux éléments hydrostatiques à cylindrées variables 8, 9 qui, suivant le point de fonctionnement, peuvent jouer le rôle de pompe ou de moteur. Les deux éléments hydrostatiques 8 et 9 sont montés dans un circuit hydraulique fermé 10. L'élément hydrostatique 8 est lié mécaniquement au pignon planétaire 11 du train d'engrenages épicycloïdal 5 par l'intermédiaire d'un arbre 13.

De la même manière, l'élément hydrostatique 9 est lié mécaniquement au pignon planétaire 14 du train d'engrenages épicycloïdal 6 par l'intermédiaire d'un arbre 16.

L'entrée du mouvement sur chacun des trains d'engrenages épicycloïdaux 5 et 6 se fait par une couronne dentée 17, 18. La couronne dentée 17 engrène avec le pignon 4 solidaire de l'arbre d'entrée 1. Les deux couronnes dentées 17 et 18 engrènent ensemble.

Sur la fig. 1, le pignon d'entrée 4 engrène directement avec la couronne dentée 17 qui est solidaire de la couronne 21 du train d'engrenages épicycloïdal 5, la sortie se faisant par le porte-satellite 19. De la même manière, la sortie de puissance du train d'engrenages épicycloïdal 6 se fait par le porte-satellite 20 tandis que la couronne 22 est solidaire de la couronne dentée 18 qui engrène avec la couronne dentée 17. Dans une variante, non représentée sur les figures, il serait possible que les couronnes dentées 17, 18 soient au contraire liées aux porte-satellites 19, 20.

Dans le mode de réalisation illustré sur la fig. 1, les éléments de sortie des trains d'engrenages épicycloïdaux 5, 6 sont constitués par les porte-satellites 19, 20 qui engrènent avec les pignons satellites 23, 24. Les porte-satellites 19, 20 sont donc solidaires respectivement des arbres de sortie 2 et 3.

La sortie du mouvement de la transmission se fait par l'arbre 3. Le report de la puissance transmise à l'arbre intermédiaire 2 sur l'arbre de sortie 3 se fait par l'intermédiaire de deux ensembles de pignons 25, 26 présentant deux rapports d'engrènement différents. Le premier ensemble de pignons 25 comprend un pignon 27 montré libre sur l'arbre 2 et pouvant être solidarisé avec ce dernier par l'intermédiaire d'un dispositif approprié. Le pignon 27 engrène avec un pignon 29 de plus grand diamètre solidaire de l'arbre de sortie 3.

L'ensemble de pignons 26 comprend un pignon 30 monté libre sur l'arbre 2 et pouvant être solidarisé avec ce dernier au moyen d'un dispositif approprié. Le pignon 30 engrène avec un pignon 32 solidaire de l'arbre de sortie 3 et présentant un diamètre inférieur au pignon 30.

L'un ou l'autre des deux rapports d'engrènement définis par les deux ensembles de pignons 25, 26 entre les deux arbres 2, 3 peut être sélectionné suivant le point de fonctionnement.

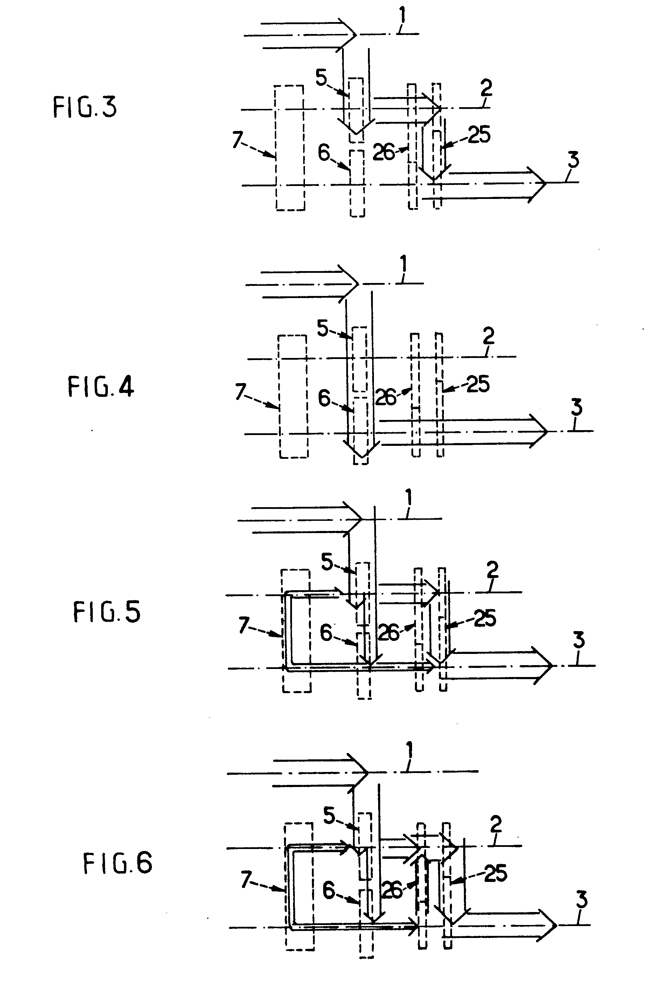

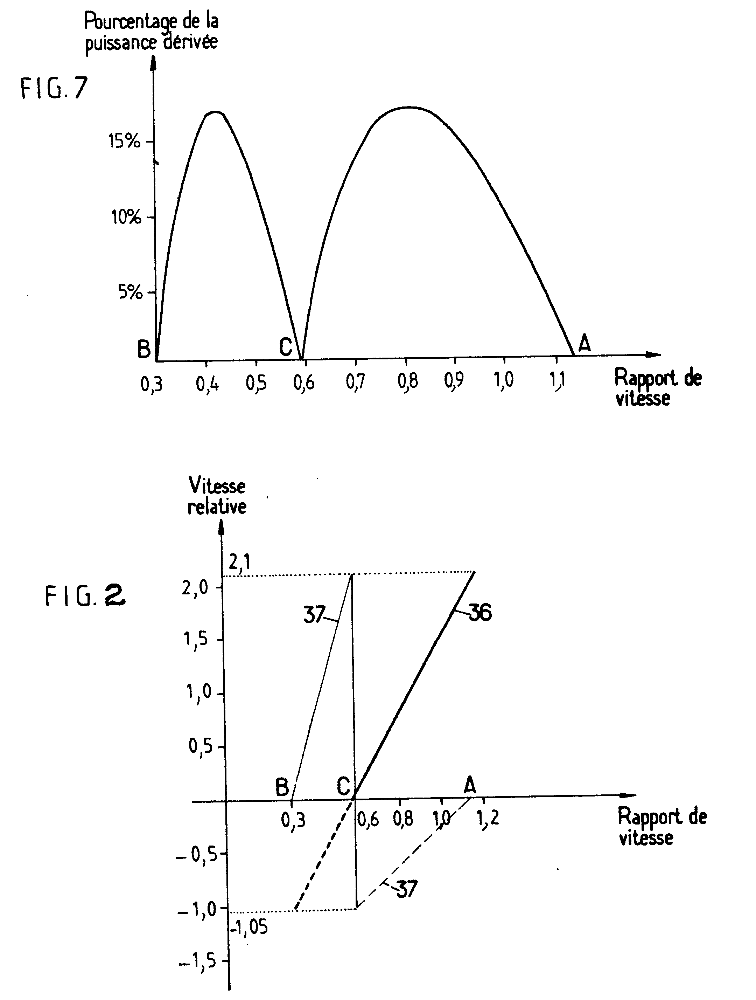

On va maintenant décrire, en se référant au mode de réalisation de la fig. 1 et aux différents circuits des puissances illustrés sur les figs. 3, 4, 5 et 6 ainsi que les graphes des figs. 7 et 2, le fonctionnement de la transmission selon l'invention. On commencera par décrire certains points particuliers du fonctionnement de la transmission.

Pour un premier point de fonctionnement, l'élément hydrostatique 9, qu'il joue le rôle de pompe ou de moteur, est à cylindrée nulle, l'élément hydrostatique 8 étant à vitesse nulle en raison de l'égalité des débits, aux fuites près, dans le circuit hydraulique 10. Le pignon planétaire 11 du train d'engrenages épicycloïdal 5 se trouve donc bloqué. Le rapport des vitesses entre l'arbre 2 et l'arbre d'entrée 1 est déterminé par les caractéristiques du train d'engrenages 5 et la vitesse de rotation de l'arbre de sortie 3 dépend du choix du rapport d'engrènement par l'un ou l'autre des ensembles de pignons 25, 26 entre les arbres 2 et 3.

Dans l'exemple dont le fonctionnement est illustré sur les graphes des figs. 7 et 2, les rapports d'engrènement des deux ensembles de pignons 25, 26 sont égaux respectivement à 1,95 et 1/1,95. Les vitesses de sortie obtenues pour ces deux rapports d'engrènement, dans le cas où l'élément hydrostatique 8 est bloqué, sont les vitesses de sortie extrêmes qu'il est possible d'obtenir pour la transmission. Elles sont donc dans un rapport de $(1,95)^2$ soit environ 3,8. Les deux points de fonctionnement correspondants sont appelés «points d'adaptation». Ces deux points d'adaptation A et B sont figurés sur l'échelle référencée «rapport de vitesse» en abscisses des graphes des figs. 7 et 2.

Un autre point de fonctionnement particulier appelé «point d'adaptation milieu» et référencé C sur les figs. 7 et 2 est obtenu dans le cas où c'est l'élément hydrostatique 8 qui est à cylindrée nulle et l'élément hydrostatique 9 à vitesse nulle bloquant ainsi le planétaire 14 du train d'engrenages épicycloïdal 6. Le rapport de vitesse de l'arbre de sortie 3 à l'arbre d'entrée 1 est déterminé, compte tenu du blocage du planétaire 14 par les caractéristiques du train d'engrenages épicycloïdal 6. On obtient une vitesse de sortie qui se trouve située entre les vitesses de sortie obtenues précédemment pour les points A et B. La vitesse obtenue au point C est en réalité la moyenne géométrique des vitesses obtenues pour les points A et B.

Pour les trois points particuliers A, B et C, la puissance passant dans le variateur hydrostatique 7 qui comprend les éléments hydrostatiques 8 et 9 est théoriquement nulle. Toute la puissance moteur se retrouve sur l'arbre de sortie du train d'engrenage 5 ou du train d'engrenages 6 dont le pignon planétaire respectif 11 ou 14 est bloqué.

Les figs. 3 et 4 montrent le circuit des puissances mises en jeu pour ces cas particuliers. Sur ces figures, comme sur les figures analogues 5 et 6, on a représenté les trois arbres parallèles 1, 2 et 3 et, en pointillés de manière schématique, les principaux éléments de la transmission qui portent les mêmes références que sur les autres figures.

Le report de puissance d'un organe ou d'un arbre à l'autre est schématisé par des flèches dont la largeur représente le pourcentage de puissance. On note en particulier que la totalité de la puissance pénètre dans la transmission par l'arbre d'entrée 1 et se retrouve, aux pertes près, sur l'arbre de sortie 3.

La fig. 3 correspond au fonctionnement des points d'adaptation A et B où la puissance est transmise intégralement par l'arbre 2. On a illustré plus précisément sur la fig. 3 le cas particulier du point B où la transmission de puissance se fait par l'ensemble de pignons 25. Pour le point A, la transmission de puissance se ferait de la même manière par l'arbre 2 puis par l'ensemble de pignon 26.

Sur la fig. 4 se trouve illustrée la transmission de puissance pour le point d'adaptation milieu C dans lequel l'intégralité de la puissance moteur est transmise directement sur l'arbre de sortie 3 sans passer par l'arbre 2.

Entre les trois points de fonctionnement A, B, C se trouvent une infinité de points où une fraction de la puissance totale est dérivée par le circuit hydraulique du variateur hydrostatique 7. On dit que cette puissance est «dérivée» étant donné qu'il y a transfert de puissance d'un train d'engrenages épicycloïdal vers l'autre. Si l'on fait le choix du rapport d'engrènement défini par le premier ensemble de pignons 25 entre les arbres 2 et 3, on peut obtenir toute une plage de rapports de vitesses entre le rapport de vitesse minimal correspondant au point d'adaptation B et celui correspondant au point d'adaptation milieu C. Pour toute cette plage de fonctionnement, l'élément hydrostatique 8 fonctionne comme un moteur hydrostatique tandis que l'élément 9 fonctionne comme une pompe hydrostatique. Le transfert des puissances mises en jeu est illustré dans ce cas par la fig. 5 où l'on voit qu'une partie de la puissance se trouve dérivée dans le variateur hydrostatique 7.

Si l'on a fait le choix du rapport d'engrènement du premier ensemble de pignons 25, on obtient donc une plage de rapport de vitesse entre les deux points d'adaptation B et C qui corresponde respectivement à l'annulation de l'une des cylindrées: le point du rapport minimal B où la cylindrée de l'élément hydrostatique 9 est nulle et le point d'adaptation C où la cylindrée de l'élément hydrostatique est nulle. Cette plage continue de rapport de vitesse sera appelée dans la suite de la description un «mode». La plage s'étendant du point B au point C constitue ainsi le «premier mode» de fonctionnement de la transmission selon l'invention.

Si l'on fait le choix du rapport d'engrènement du deuxième ensemble de pignons 26 entre les arbres 2 et 3, on obtient un second mode accolé au précédent puisqu'il s'étend du point d'adaptation milieu C (élément 9 bloqué) au point de rapport de vitesse maximal A (élément 8 bloqué).

La transmission selon l'invention permet donc d'obtenir deux modes de fonctionnement jointifs au point d'adaptation milieu C. Le rapport des vitesses extrêmes qui est appelé la «raison» est pour chacun des deux modes de 1,95, l'ensemble ayant ainsi une raison de 3,8.

Le rapport de vitesse exact dans la transmission est déterminé par le réglage des cylindrées des éléments hydrostatiques 8 et 9. C'est ainsi que dans le premier mode, partant du point d'adaptation B à rapport de vitesse minimal où la cylindrée de l'élément 9 est nulle tandis que la vitesse de rotation de l'élément 8 est nulle, l'augmentation progressive de la cylindrée de l'élément hydrostatique 9 provoque l'augmentation progressive de la vitesse de rotation de l'élément hydrostatique 8 qui joue dans ce mode le rôle de moteur hydrostatique. Il en résulte, par l'intermédiaire du train d'engrenages épicycloïdal 5, l'augmentation de la vitesse de rotation de l'arbre 2. Cet effet continu est obtenu jusqu'au point d'adaptation milieu C en réduisant corrélativement la cylindrée du moteur 8 ce qui entraîne une réduction de la vitesse de rotation de la pompe 9 jusqu'au blocage du pignon planétaire 14 du second train d'engrenages épicycloïdal 6.

Dans le second mode, le fonctionnement est identique, les rôles des éléments hydrostatiques 8 et 9 étant inversés.

Sur la fig. 7 on a indiqué en ordonnées le pourcentage de la puissance dérivée dans le variateur hydraulique 7 par rapport à la puissance totale. On voit que la puissance dérivée, qui est nulle aux trois points d'adaptation A, B et C, c'est-à-dire aux extrémités de chaque mode, passe par un maximum pour chaque mode. Ce maximum est fonction de la raison du mode. Dans l'exemple illustré où la raison de chaque mode est égale à 1,95, ce maximum est égal à environ 17% de la puissance totale.

Si l'on considère le graphe de la fig. 2 où l'on a placé en ordonnées la vitesse relative de chacun des éléments hydrostatiques 8 et 9 par rapport à la vitesse du moteur du véhicule, la droite 36 montre la variation de vitesse de l'élément hydrostatique 9 tandis que les segments de droite 37 en trait plus fin montrent les variations de vitesse de l'élément hydrostatique 8. Les parties des droites 36 et 37 en trait plein correspondent au fonctionnement des éléments hydrostatiques respectifs en moteur hydraulique tandis que les parties en pointillé correspondent au fonctionnement en pompe hydraulique. On voit que la vitesse de l'élément hydrostatique 9 (droite 36) est nulle au point d'adaptation milieu C et maximale pour les points d'adaptation A et B. Au contraire, la vitesse de rotation de l'élément hydrostatique 8 (droite 37) est nulle aux extrémités A et B des deux modes et maximale pour le point d'adaptation milieu C qui correspond au changement de mode.

Au point d'adaptation C où s'opère le changement de mode par le passage du rapport d'engrènement du premier ensemble de pignons 25 entre les arbres 2 et 3 au rapport d'engrènement du deuxième ensemble de pignons 26, la cylindrée de l'élément 8 est nulle et l'élément 9 est bloqué (vitesse nulle sur la droite 36). Comme on l'a vu, toute la puissance moteur est alors transmise par le second train d'engrenages épicycloïdal 6 (fig. 4). Comme on peut le voir sur le graphe de la fig. 2, le changement de mode nécessite d'inverser le sens de rotation de l'élément hydrostatique 8 et d'amener sa vitesse à celle correspondant au rapport d'engrènement choisi. Cette opération se fait par un dispositif de synchronisation qui sélectionne le rapport d'engrènement choisi alors que le blocage du pignon planétaire 14 du deuxième train d'engrenages épicycloïdal 6 assure la stabilité du rapport de vitesse et la continuité du couple.

Le mode de réalisation illustré sur la fig. 1 permet d'obtenir comme on vient de le voir deux modes jointifs. Grâce à la disposition particulière des différents éléments de la transmission et en particulier l'utilisation de trois arbres parallèles, il est possible d'accoupler directement les éléments hydrostatiques 8 et 9 en bout des trains d'engrenages épicycloïdaux 5 et 6. Le changement de mode se fait par changement du rapport d'engrènement entre les arbres de sortie 2 et 3 des deux trains d'engrenages épicycloïdaux permettant ainsi d'obtenir directement deux modes de fonctionnement jointifs.

L'automatisation complète de la transmission peut être obtenue à l'aide d'un microprocesseur assurant par exemple une consommation minimale en fonction d'un choix effectué par l'utilisateur portant sur le caractère constant de la vitesse d'avancement ou de la vitesse du moteur du véhicule. Un système hydraulique peut alors effectuer automatiquement la commande des vérins pour le réglage des cylindrées des deux éléments hydrauliques 8 et 9 ainsi que la commande des embrayages multidisques 28 et 31 permettant le réglage effectif du rapport de vitesse.

Dans le mode de réalisation illustré sur la figure 1 on a illustré un dispositif permettant la sélection et le changement automatique du rapport d'engrènement entre les deux arbres de sortie 2 et 3 des trains d'engrenages épicycloïdaux 5 et 6. Ce dispositif comprend, tel qu'il est illustré, un double crabot 43 monté sur l'arbre de sortie 2 du train d'engrenages épicycloïdal 5 assurant le verrouillage mécanique de l'un ou l'autre des rapports d'engrènement défini par les ensembles de pignons 25 et 26.

Le dispositif comprend en outre, une pompe auxiliaire 44, entraînée par le moteur du véhicule non représenté sur la figure, ladite pompe 44 étant montée dans un circuit hydraulique auxiliaire comprenant une branche d'alimentation 45 et une branche de retour 46. Le circuit auxiliaire est monté en dérivation sur l'élément hydraulique 8.

Une électrovalve de coupure 47 à deux positions et quatre voies est montée dans le circuit hydraulique 10 entre les deux éléments hydrostatiques 8 et 9 de façon à pouvoir isoler l'élément hydrostatique 9 lorsque la valve 47 est placée dans la position inverse de celle qui est représentée sur la fig. 10.

Un distributeur 48, par exemple à commande électrique, à quatre voies et trois positions, est monté dans le circuit auxiliaire comportant les canalisations 45 et 46 afin de permettre l'inversion du sens d'alimentation par la pompe 44. De cette manière il est possible d'obtenir la synchronisation désirée à la fois pour passer du premier mode au second et pour passer du second mode au premier.

Une soupape de décharge 49 complète le circuit auxiliaire et permet la décharge du circuit par la canalisation 45 dans le réservoir 50.

La pompe auxiliaire 44 est de préférence une pompe volumétrique, généralement à engrenages, qui débite à pression nulle lorsqu'elle est inutilisée. Dans l'un ou l'autre des modes de fonctionnement de la transmission, le double crabot 43 est verrouillé sur le rapport d'engrènement correspondant à l'un des deux ensembles de pignons 25 ou 26.

On va maintenant décrire le fonctionnement du dispositif pour le changement automatique de mode au point d'adaptation milieu C, par exemple pour passer du premier mode au second mode. A ce point, la cylindrée de l'élément hydrostatique 8 est nulle et l'élément hydrostatique 9 est bloqué (fig. 2). La vitesse relative de l'élément 8 est égale à 2,1, c'est-à-dire que la vitesse de rotation de l'élément 8 est égale à 2,1 fois la vitesse de rotation du moteur du véhicule. On agit alors sur la valve de coupure 47 qui coupe le circuit hydraulique principal 10. Cela ne modifie pas la situation, l'élément hydrostatique 9 se trouvant bloqué en raison de l'isolement du circuit hydraulique par la valve de coupure 47.

Après désengagement du crabot 43, on agit sur le distributeur 48 de façon à alimenter l'élément hydrostatique 8 par la pompe auxiliaire 44 dans un sens tel que le débit de la pompe 44 s'oppose, au départ, au débit de l'élément 8 lorsque l'on augmente progressivement la cylindrée de l'élément 8. La vitesse de la pompe 44 étant donnée par celle du moteur du véhicule et sa cylindrée étant fixe, l'augmentation de la cylindrée de l'élément 8 jusqu'à une valeur déterminée permet successivement l'inversion de la vitesse de rotation de l'élément 8 et la stabilisation de cette vitesse à la valeur recherchée de −1,05 fois la vitesse du moteur.

D'une manière générale, la cylindrée finale de l'élément 8 est telle que le rapport de la cylindrée de l'élément 8 à la cylindrée de la pompe auxiliaire 44 soit l'inverse de la valeur de la vitesse relative que l'on désire obtenir pour l'élément 8 (dans l'exemple considéré 2,1 ou 1,05).

Après stabilisation, on obtient le synchronisme des vitesses nécessaires pour sélectionner, à l'aide du double crabot 43, le nouveau mode choisi. La soupape 49 assure la décharge du circuit auxiliaire tant que la stabilisation n'est pas intervenue. On peut ensuite engager le rapport d'engrènement de l'autre ensemble de pignons correspondant au mode choisi et commencer la variation continue du rapport de vitesse à l'intérieur dudit mode.

Le double crabot 43 peut être remplacé par des dispositifs de crabot simples disposés sur chacun des arbres 2 ou 3. On peut également remplacer le double crabot 43 par un double système de synchronisation c'est-à-dire un dispositif de crabot muni de cônes de frottement et d'un dispositif d'interdiction de passage du crabot en l'absence de synchronisme des pièces à craboter. Dans ce cas, l'effort d'appui du vérin de commande du dispositif de synchronisation ne se traduit par la solidarisation par crabotage des organes correspondants au rapport d'engrènement désiré que lorsque l'on a obtenu le synchronisme exact de ces organes par la variation de la cylindrée de l'élément hydrostatique 8.

On voit que l'on obtient ainsi un dispositif entièrement autmatique permettant d'effectuer la synchronisation des pièces lors du changement de mode en utilisant l'élément hydrostatique 8 à cylindrée variable qui se trouve disponible à ce moment puisque le rapport de vitesse de la transmission est bloqué par l'autre élément hydrostatique 9 et le deuxième train d'engrenages épicycloïdal 6. L'alimentation du premier élément hydrostatique à cylindrée variable 8 par une pompe volumétrique auxiliaire 44 et le réglage de sa cylindrée à une valeur déterminée indépendante du régime moteur, permet d'obtenir le synchronisme des pièces à solidariser par rabotage dans le mécanisme principal pour l'obtention du mode choisi. On bénéficie ainsi de la puissance d'une alimentation hydraulique pour opérer rapidement le changement de mode tandis que le second train d'engrenages épicycloïdal 6 assure la continuité de la transmission du couple.

La transmission selon l'invention peut être utilisée sur un tracteur agricole ou forestier et d'une manière générale dans tout type de travail qui, à cause de la médiocre tenue du sol, demande une souplesse d'utilisation presque comparable à celle d'un engin de travaux publics. Pour un tracteur agricole utilisant un mode de réalisation de l'invention à deux modes de fonctionnement, on obtient par exemple, en gamme champ, une variation continue de la vitesse du tracteur de 3 à 11 km/h et en gamme route, une variation continue de la vitesse de 8 à 30 km/h pour un régime moteur nominal.

**Revendications**

1. Transmission à dérivation de puissance hydraulique, comprenant: deux trains d'engrenages épicycloïdaux (5, 6) comportant deux arbres de sortie parallèles (2, 3); un variateur hydrostatique (7) comportant deux éléments hydrostatiques à cylindrée variable (8, 9) montés dans un circuit hydraulique fermé (10), chacun des éléments hydrostatiques (8, 9) étant lié mécaniquement aux pignons planétaires (11, 14) de l'un des trains d'engrenages épicycloïdaux (5, 6); et deux ensembles de pignons (25, 26) présentant deux rapports d'engrènement différents pouvant coopérer alternativement sous l'action de moyen de commande de synchronisation, afin de définir deux rapports de vitesses de rotation pour les arbres de sortie respectifs (2, 3) des deux trains d'engrenages épicycloïdaux (5, 6), caractérisée par le fait que les moyens de commande de synchronisation comprennent: un dispositif de verrouillage commandé (43) monté sur au moins l'un des arbres de sortie (2, 3) des trains d'engrenages épicycloïdaux (5, 6) permettant de sélectionner l'un ou l'autre des deux ensembles de pignons (25, 26); des moyens (47) pour interrompre le circuit hydraulique fermé (10) des éléments hydrostatiques (8, 9); une pompe hydraulique auxiliaire (44) montée dans un circuit hydraulique auxiliaire (45, 46) de façon à pouvoir alimenter l'un des éléments hydrostatiques (8) et inverser son sens de rotation.

2. Transmission selon la revendication 1, caractérisée par le fait que la pompe auxiliaire (44) est entraînée par le moteur du véhicule.

3. Transmission selon les revendications 1 ou 2, caractérisée par le fait qu'un distributeur à quatre voies (48) est monté dans le circuit auxiliaire (45, 46) afin de permettre l'inversion du sens d'alimentation de l'élément hydrostatique (8) par la pompe hydraulique auxiliaire (44).

4. Transmission selon l'une quelconque des revendications 1 à 3, caractérisée par le fait que le dispositif de verrouillage (43) est un double crabot muni ou non de cônes de synchronisation, monté sur l'arbre de sortie (2) du train d'engrenages épicycloïdal (5) lié mécaniquement à l'élément hydrostatique (8) alimenté par le circuit auxiliaire.

5. Transmission selon l'une quelconque des revendications précédentes, caractérisée par le fait que les éléments hydrostatiques (8, 9) sont accouplés directement en bout des trains d'engrenages épicycloïdaux (5, 6) à leur pignon planétaire respectif (11, 14).

6. Transmission selon la revendication 5, caractérisée par le fait que les deux arbres de sortie (2, 3) respectifs des trains d'engrenages épicycloïdaux (5, 6) sont montés sensiblement en triangle avec un arbre d'entrée (1) du mouvement de la transmission, lesdits arbres étant parallèles entre eux.

7. Transmission selon l'une quelconque des revendications précédentes, caractérisée par le fait qu'elle comprend un pignon d'entrée (4) engrenant avec une couronne dentée (17) liée à un élément (19, 21) de l'un des trains d'engrenages épicycloïdaux (5), lequel engrène à son tour avec l'élément correspondant (18) de l'autre train d'engrenages épicycloïdal (6).

**Claims**

1. A transmission with hydraulic power shunt comprising: two epicyclic gear trains (5, 6) comprising two parallel output shafts (2, 3); a hydrostatic variator (7) comprising two variable-capacity hydrostatic elements (8, 9) mounted in a closed hydraulic circuit (10), each of the hydrostatic elements (8, 9) being mechanically connected to the sun gears (11, 14) of one of the epicyclic gear trains (5, 6); and two assemblies of gears (25, 26) having two different gear ratios which are capable of co-operating alternatively under the action of synchronisation control means in order to define two rotary speed ratios for the respective output shafts (2, 3) of the two epicyclic gear trains (5, 6), characterised in that the synchronisation control means comprise: a controlled locking device (43) mounted on at least one of the output shafts (2, 3) of the epicyclic gear trains (5, 6) permitting selection of one or other of the two gear assemblies (25, 26); means (47) for interrupting the closed hydraulic circuit (10) of the hydrostatic elements (8, 9); and an auxiliary hydraulic pump (44) mounted in an auxiliary hydraulic circuit (45, 46) so as to be able to feed one of the hydrostatic elements (8) and reverse its direction of rotation.

2. A transmission according to claim 1, characterised in that the auxiliary pump (44) is driven by the engine of the vehicle.

3. A transmission according to claim 1 or claim 2, characterised in that a four-way distributor (48) is mounted in the auxiliary circuit (45, 46) in order to permit reversal of the direction of feed of the hydrostatic element (8) by the auxiliary hydraulic pump (44).

4. A transmission according to any one of claim 1 to 3, characterised in that the locking device (43) is a double dog clutch which may or may not be provided with synchronisation cones and which is mounted on the output shaft (2) of the epicyclic gear train (5) mechanically connected to the hydrostatic element (8) fed by the auxiliary circuit.

5. A transmission according to any one of the preceding claims, characterised in that the hydrostatic elements (8, 9) are coupled directly at the end of the epicyclic gear trains (5, 6) to their respective sun gears (11, 14).

6. A transmission according to claim 5, characterised in that the two respective output shafts (2, 3) of the epicyclic gear trains (5, 6) are mounted substantially in a triangular configuration with an input shaft (1) of the mechanism of the transmission, said shafts being parallel to each other.

7. A transmission according to any one of the preceding claims, characterised in that it comprises an input gear (4) meshing with a toothed ring (17) connected to an element (19, 21) of one of the epicyclic gear trains (5) which in turn meshes with the corresponding element (18) of the other epicyclic gear·train (6).

**Patentansprüche**

1. Hydrostatisches leistungsverzweigtes Getriebe mit: zwei Umlaufgetrieben (5, 6), die parallele Ausgangswellen (2, 3) aufweisen; einen hydrostatischen Versteller (7), der zwei hydrostatische Bauteile mit variablen Zylindern (8, 9) aufweist, die in einem geschlossenen hydraulischen Kreislauf (10) angeordnet sind, wobei jedes hydrostatische Bauteil (8, 9) mechanisch mit den Sonnenrädern (11, 14) des einen der Umlaufgetriebe (5, 6) verbunden ist: und zwei Ritzelanordnungen (25, 26), die zwei verschiedene Übersetzungsverhältnisse aufweisen und die abwechselnd zusammenwirken unter der Einwirkung einer Synchronisations-Steueranordnung um dergestalt zwei Rotationsgeschwindigkeitsverhältnisse für die entsprechenden Ausgangswellen (2, 3) der beiden Umlaufgetriebe (5, 6) zu bilden, dadurch gekennzeichnet, dass die Synchronisations-Steueranordnung aufweist: eine gesteuerte Verriegelungsvorrichtung (43), die auf wenigstens einer der Ausgangswellen (2, 3) der Umlaufgetriebe (5, 6) angeordnet ist zur Auswahl der einen oder anderen der beiden Ritzelanordnungen (25, 26); eine Anordnung (47) zum Unterbrechen des geschlossenen hydraulischen Kreislaufs (10) der hydraulischen Bauteile (8, 9); eine zusätzliche hydraulische Pumpe (44), die in einem zusätzlichen hydraulischen Schaltkreis (45, 46) derart abgeordnet ist, dass sie eines der hydraulischen Bauteile (8) versorgen kann um seine Drehrichtung umzukehren.

2. Getriebe nach Anspruch 1, dadurch gekennzeichnet, dass die zusätzliche Pumpe (44) durch den Fahrzeugmotor antreibbar ist.

3. Getriebe nach Ansprüchen 1 oder 2, dadurch gekennzeichnet, dass ein Vierweg-Verteiler (48) im zusätzlichen Schaltkreis (45, 46) vorgesehen ist, um die Umkehrung der Versorgungsrichtung des hydrostatischen Bauteils (8) durch die zusätzliche hydraulische Pumpe (44) zu ermöglichen.

4. Getriebe nach einem der Ansprüche 1 bis 3, dadurch gekennzeichnet, dass die Verriegelungsvorrichtung (43) eine Doppelkupplung ist, die mit Synchronkegeln versehen ist oder nicht und die auf der Ausgangswelle (2) des Umlaufgetriebes (5) angeordnet ist und mechanisch mit dem durch den zusätzlichen Schaltkreis versorgten hydrostatischen Bauteil (8) verbunden ist.

5. Getriebe nach einem der vorhergehenden Ansprüche, dadurch gekennzeichnet, dass die hydrostatischen Bauteile (8, 9) endseitig direkt mit den Umlaufgetrieben (5, 6) über ihre entsprechenden Sonnenräder (11, 14) verbunden sind.

6. Getriebe nach Anspruch 5, dadurch gekennzeichnet, dass die beiden Ausgangswellen (2, 3) der entsprechenden Umlaufgetriebe (5, 6) mit einer Eingangswelle (1) des Getriebeantriebs im wesentlichen im Dreieck angeordnet sind, wobei diese Wellen parallel zueinander sind.

7. Getriebe nach einem der vorhergehenden Ansprüche, dadurch gekennzeichnet, dass es ein Eingangsritzel (4) aufweist, das mit einem Zahnkranz (17) kämmt, der mit einem Bauteil (19, 21) des einen der beiden Umlaufgetriebe (5) verbunden ist, das seinerseits mit dem entsprechenden Bauteil (18) des anderen Umlaufgetriebes (6) kämmt.

FIG.1

FIG.3

FIG.4

FIG.5

FIG.6

FIG. 7

Pourcentage de la
puissance dérivée

15%

10%

5%

B             C                    A

0,3    0,4    0,5    0,6    0,7    0,8    0,9    1,0    1,1     Rapport de
vitesse

FIG. 2

Vitesse
relative

2,1

2,0

37

36

1,5

1,0

0,5

B      C          A

0,3    0,6   0,8   1,0   1,2     Rapport de
vitesse

−0,5

37

−1,0

−1,05

−1,5